# EUROPEAN PATENT APPLICATION

(11) **EP 4 424 645 A1**
(43) Date of publication of application: **04.09.2024**
(21) Application number: 24159733.5
(22) Date of filing: 26.02.2024
(51) Int. Cl.: C02F 1/00, C02F 1/78, C02F 1/68

(54) **WATER TREATMENT UNIT AND METHOD OF CLEANING A WATER TREATMENT UNIT**

(30) Priority: 28.02.2023 DE 102023104932
(71) Applicant: Aquis Systems AG, 9445 Rebstein (CH)
(72) Inventor: Huck, Kai, 9428 Walzenhausen (CH); Gröning, Ingolf, 97980 Bad Mergentheim (DE)
(74) Representative: Zimmermann & Partner Patentanwälte mbB

(57) **Abstract**

The invention relates to a water treatment unit (1) comprising a filter (9) disposed downstream of a water inlet (11), wherein the water inlet (11) is intended to supply the filter (9) with water to be treated, a conduit system disposed downstream of the filter (9) in order to remove treated water that has flowed through the filter (9) in the direction of a water outlet (21) for release of water to a user, and an ozone generator (3) set up to introduce ozone into an ozone supply conduit (5), wherein the ozone supply conduit (5) opens into the conduit system between the filter (9) and the water outlet (11) .

## Description

### Technical field

The invention relates to a water treatment unit and a method of cleaning a water treatment unit.

### Prior art

In water treatment units, especially units for cold water treatment, microbial contamination can occur. This also relates to units that are equipped with a water filter or can be equipped with a water filter. In water treatment units, it is possible for retrograde microbial contamination to occur, which is introduced into the water treatment unit via an outlet region.

Some of the known methods of reducing the level of microbes in water, for example exposure to UV-C light, can have disadvantages. For example, UV-C lamps also introduce heating output which, depending on the site of installation of the water treatment unit, cannot be removed under some circumstances. Safety devices can have the effect that the unit can switch off due to the threat of overheating, and so microbes can multiply. The effect of UV-C light may be limited to the region of the water conduit under direct incidence of light. In addition, heat in the device increases the rate of multiplication of microbes. Thus, in particular, there is no prevention of retrograde microbial contamination through the output device. Nor is the water withdrawn directly freed of microbes, there is no prevention of formation of a biofilm, and there is no degradation of any biofilm present.

### Disclosure of the invention

It is an object of the invention to at least partly solve the problems from the prior art. In particular, it is an object of the invention to specify a water treatment unit and a method of cleaning a water treatment unit that reduce or preclude the risk of microbial contamination. Ease of operability and user safety should be ensured.

The object is achieved by a water treatment unit as claimed in claim 1 and by a method of cleaning a water treatment unit as claimed in the further independent claim. Advantageous developments and embodiments will be apparent from the dependent claims and from this description.

A first aspect of the invention relates to a water treatment unit comprising a filter disposed downstream of a water inlet, wherein the water inlet is intended to supply the filter with water to be treated, a conduit system disposed downstream of the filter in order to remove treated water that has flowed through the filter in the direction of a water outlet for release of water to a user, and an ozone generator set up to introduce ozone into an ozone supply conduit, wherein the ozone supply conduit opens into the conduit system between the filter and the water outlet.

A further aspect of the invention relates to a method of cleaning a water treatment unit as claimed in any of the preceding claims, comprising: operating the ozone generator for generation of ozone; and opening an ozone supply valve disposed in the ozone supply conduit for supply of ozone from the ozone generator through the ozone supply conduit into the conduit system.

In typical embodiments, the ozone generator is set up to introduce ozone into the conduit system with a concentration of more than 0.1ml/m³, more than 0.3ml/m³ or even more than 0.5ml/m³. In methods of typical embodiments, the ozone is introduced into the conduit system with a concentration of more than 0.1ml/m³. The concentration is typically present in the conduit system, wherein the ozone is typically mixed with unconditioned water, for example from a water conduit in a domestic kitchen. In typical embodiments, the concentration is present in the conduit system downstream of the ozone supply conduit.

Typically, the filter takes the form of a filter cartridge. This enables simple exchangeability. Further embodiments may comprise bag filters or other types of filter.

Typical water treatment units comprise a backflow guard provided within the filter or downstream of the filter. Typically, the backflow guard may be provided in the conduit between the filter and the ozone feed conduit or. The backflow guard is preferably incorporated in the filter cartridge or disposed in a filter head. Such arrangements can have the effect that the entire water tract downstream of the backflow guard of the filter can be exposed to ozone. The expression "filter head" typically refers to the portion into which the preferably exchangeable filter cartridge is introduced. In the case that the backflow guard is disposed in the filter head, only a very small zone of water is not exposed to ozone, namely the water between the filter cartridge and the backflow guard in the filter head, but this water, rather than remaining there for a sustained period, is fully exchanged when the filter cartridge is exchanged, if not earlier. In the case of a backflow guard disposed in the conduit between filter head and ozone feed, it should be taken into account for operation that it would not be possible to expose part of the conduit to ozone. On the other hand, such an arrangement can offer simple construction.

Typical embodiments of water treatment units comprise a control device set up to detect a volume of water treated by the water treatment unit. This may make it possible, for example, to initiate a cleaning process in particular use intervals that are dependent on the volume. Typically, the control device is set up to initiate a new cleaning process depending on the volume of water treated, especially the volume since a last cleaning process. In addition, a new cleaning process can be initiated depending on a period of time since a last cleaning process. In typical embodiments, both the volume and the period of time are taken into account, and a new cleaning process is initiated on attainment of one of the limits for volume and period of time.

Before the initiating of a cleaning process, typical embodiments provide a message to a user, and acknowledgement by the user may typically be necessary before the start of the cleaning process. The message to the user is given, for example, via a display having data connection with the control device, via light signals on an operation head of the water treatment unit, in an app on the user's cellphone or via an email. The user typically then has the option of starting the cleaning process, moving it to a particular later juncture or delaying it indefinitely. The latter can trigger a reminder to the user.

In the case of typical water treatment units, the control device is set up to conduct a purge process after a cleaning process, especially before a release of water for a user is permitted by the control device. A purge process may comprise purging of the water treatment unit with fresh water. A purge process typically has a predetermined duration or a predetermined sequence of valve circuits of valves in order to ensure that ozone is at least substantially purged out.

In typical embodiments, the following are provided downstream of the ozone supply conduit in the conduit system: a cooler for cooling the water, a boiler for heating the water and/or a carbonator for carbonating the water. In typical embodiments, at least one cooler is present. In the case of a boiler, sterilization can additionally or alternatively be effected by heating. Typical embodiments do not include a boiler. In typical embodiments with a boiler, a benefit can arise in that a holiday mode or eco mode can be programmed in the control device. The boiler may be switched off entirely or be kept colder than 62°C, for example, since sterilization with ozone is possible, such that energy can be saved to a high degree. For example, after holiday mode has been ended and the temperature of the water in the boiler is detected by the electronics to have fallen below 62°C, a cleaning process can be automatically executed. In addition, it is possible to conduct a cleaning process when the boiler is switched off or at a set temperature of the boiler below a programmable threshold.

Typically, the control device is set up, in a cleaning process and/or in a purge process, to release water via the water outlet only when it has been ensured that no user will come into contact with the water released by the water outlet. In illustrative embodiments, it may be the case that a cleaning process is only started at all after ensuring this. In embodiments, it may be the case that, if it is found that a user will or could come into contact with the water released, a cleaning process or a purge process is stopped. Typically, the control device may be connected to an optical sensor that checks whether a region of the water outlet, for example a region beneath the outlet of a water tap, is clear. In typical embodiments, it is possible to check by means of a sensor integrated into the water outlet, especially an angle sensor, whether an exit or exit pipe of the water outlet is within a particular region, for example within a particular angle range above a drain, in order to ensure that the water, which may contain ozone, will run away. Angle sensors typically detect an angle position of an exit pipe of the water outlet, and water, especially ozone-containing water, is released only when the exit pipe is arranged within a particular angle range.

In typical embodiments, a message may be given, for example, on a display, for example of the water treatment unit or a mobile device belonging to the user, when a cleaning process is being started. A further example of the displaying of the message may be displaying of a particular color or flashing of an operation control.

In typical water treatment units, the following are provided downstream of the ozone supply conduit: the water outlet for release of water to a user, and additionally a water drain for drainage of water. Typically, the water outlet and the water drain are also provided downstream of a boiler, a cooler or a carbonator. Typically, the water outlet and the water drain can be actuated separately, such that they can be opened and closed independently of one another.

In embodiments with drainage via a pressure relief valve, for example in the case of embodiments with a closed boiler, the drainage may typically constitute a water drain. Typical pressure relief valves of embodiments are modified in such a way that they both open in the event of elevated pressure and can be opened by actuation via the control device. Drainage or water drain may have the benefit that less ozone-containing water is released from the water outlet. In further embodiments, it is also possible only to use a pressure relief valve without an additional function for opening, in which case all the water is released via the water outlet.

In typical water treatment units according to embodiments, the control device is set up, in a cleaning process or in a purge process, to discharge some of the water via the water outlet and some via the water drain. Unless explicitly stated otherwise herein, "or" fundamentally means "and/or". Release of water via the water drain, in addition to a water drain, can be effected via the water outlet. For example, at least intermittently, in each cleaning and purge process, water can be directed through the water outlet in order to sterilize it. Typically, the control device is set up such that ozone-containing water is released by the water outlet during a cleaning process for a defined minimum period of time. Thereafter or beforehand, the ozone-containing water can be removed by the water drain. The minimum period of time is typically chosen such that it ensures sterilization of the water outlet.

In typical water treatment units according to the invention, the control device may be set up to alternately actuate valves of the conduit system during a cleaning process or during a purge process. Typically, valves are installed in the conduit system, which are actuatable by the control device, in order, for example, to provide different conditioned water. Typically, the valves are actuated during a cleaning or purge process such that water flows reliably through all parts of the conduit system. In typical embodiments, in a memory of the control device, minimum periods of time for particular constellations of valve openings and valve closures of the valves are recorded. Typically, the minimum periods of time may be fixed depending on a volume of a vessel present in the conduit system, on conduit lengths of the conduit system, or on a microbial contamination potential of a region of the conduit system.

In typical methods, prior to operation of the ozone generator and/or prior to opening of the ozone supply valve, the following step is conducted: ensuring that no user will come into contact with the water discharged by the water outlet. Typically, a message can be issued to a user, for example by showing it in a display, including of a mobile receiving device, by means of a sound, or by lighting or a change in color of an operating element. Further options include scanning of a region beneath the water outlet, i.e., for example, of a region within a drain basin. In addition, it is possible to check whether an exit pipe of the water release is at a particular angle setting, for example in order to ensure that the exit pipe is positioned above a drain basin.

In typical embodiments, initiating of a cleaning process may be envisaged, comprising at least the steps of operating the ozone generator and opening the ozone supply valve, where the initiation is especially effected depending on a volume of the water treated by the water treatment unit since a last cleaning process and/or depending on a period of time since a last cleaning process. The "last cleaning process" typically means the last cleaning process beforehand.

In typical methods of embodiments, valves present in the conduit system are actuated alternately during a cleaning process or during a purge process.

Typically, especially after conducting a cleaning process comprising operation of the ozone generator, opening of the ozone supply valve, and closing of the ozone supply valve, when the cleaning process is ended, a purge process is especially conducted immediately. The purge process is typically followed by permitting of a release of water for a user.

### Brief description of the drawings

The present invention is elucidated below in detail with reference to the appended drawings; the figures show:
Fig. 1 a schematic view of a typical setup of a water treatment unit according to the invention; and
Fig. 2 a schematic flow diagram of the progression of a typical method according to embodiments.

### Description of working examples

There follows a description of typical embodiments of the invention with reference to the figures, although the invention is not limited to the working examples; instead, the scope of the invention is determined by the claims. In the description of the embodiment, under some circumstances, the same reference numerals are used for the same or similar parts in different figures and for different embodiments, in order to make the description clearer. However, this does not mean that corresponding parts of the invention are limited to the variants shown in the embodiments.

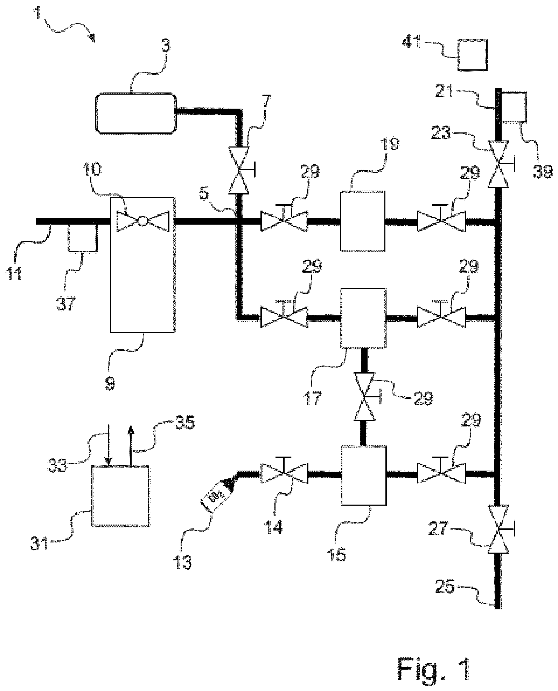

Fig. 1 shows a working example of a water treatment unit 1, the construction of which is elucidated hereinafter with reference to the schematic diagram of Fig. 1.

The water treatment unit 1 comprises an ozone generator 3, with which ozone can be introduced into a conduit system via an ozone supply 5. The ozone supply 5 can be shut off by means of an ozone supply valve 7, such that ozone can be supplied electively or not.

The conduit system of the water treatment unit 1 comprises various devices for water conditioning, such as a carbonator 15, a cooler 17 and a boiler 19, with direction of water being possible via different conduits by means of various further valves 29 electively via one or more of these devices to a water outlet 21. The water outlet typically comprises a faucet with an exit pipe. The water outlet 21 can be shut off by means of a water outlet valve 23 with respect to the conduit system of the water treatment unit 1.

Unconditioned water, for example from a water conduit in a domestic kitchen, is supplied to the conduit system via a water inlet 11 with downstream filter 9. The ozone supply 5 opens into the conduit system immediately downstream of the filter 9, typically before water can flow into one of the devices for conditioning 15, 17 and 19. Disposed between the ozone supply 5 and each of the boiler 19 and the cooler 17 is one of the further valves 29. Water may flow through the carbonator downstream of the cooler 17 via one of the further valves 29.

In order to prevent backflow of ozone-containing water from the conduit system in the direction of the water inlet 11, a nonreturn device 10 is disposed in the filter.

Typical embodiments have an ozone supply conduit that opens into the conduit system immediately downstream of the nonreturn barrier. In this way, it is possible to efficiently avoid dead spaces during the cleaning process. In embodiments with ozone supply conduits further downstream, however, the further flow of water from the filter even in normal operation can assure sufficient cleaning of the zone between filter and ozone supply conduit - at least in the case of sufficiently frequent purging of the zone with water from the water inlet.

In order to operate the carbonator, a typically exchangeable carbon dioxide storage means 13 is typically provided, from which carbon dioxide can be fed to the carbonator 15 via a carbon dioxide valve 14.

In standard operation, the water output valve 23 can control an output of water to a user. By means of the various further valves 29 in the conduit system, the flow may pass electively through carbonator 15, cooler 17 or boiler 19, in order to condition the water output beforehand according to the user's wish. During a cleaning process, ozone is supplied to the conduit system from the ozone generator 3. This involves alternately closing and opening the further valves 29 in order to facilitate flow of ozone-containing water through all conduits of the conduit system. Ozone-containing water typically also flows through the water output 21. In order not to have to release all the ozone-containing water via the water output 21, or in order to allow different flow through the conduit system in a more flexible manner, an additional water drain 25 is provided, which can be shut off by a water drain valve 27. When the water drain valve 27 is open, ozone-containing water can be guided via the drainage of the water drain 25, for example, directly into a drain.

For open-loop or closed-loop control of the functions of the water treatment unit 1, a control device 31 is provided, which has one or more signal inputs 33 and one or more signal outputs 35. For example, the signal inputs 33 may be connected to a volume flowmeter 37 disposed at the water inlet, such that the control device receives information about a volume flow rate of water flowing into the conduit system. In addition, in embodiments, an angle sensor 39 or an optical sensor 41 may be provided. The angle sensor may be used in order to determine whether an exit pipe of the faucet of the water outlet 21 is disposed above a drain basin, and the optical sensor 41 may be used in embodiments in order to determine whether a region beneath the exit pipe is clear in order, for example, to avoid contact with a hand or of sensitive articles present in a drain basin with ozone-containing water.

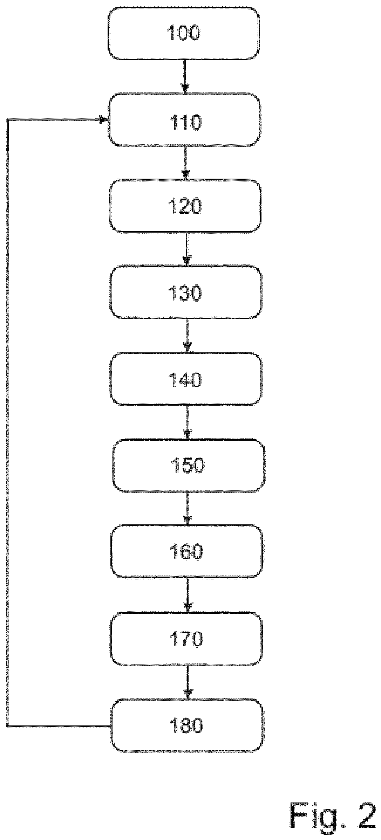

There follows a schematic elucidation, with reference to fig. 2, of a typical embodiment of a method that can be conducted with the illustrative construction of the water treatment unit of fig. 1, with general remarks relating to typical embodiments of methods according to the invention at the outset.

In embodiments, a supply of ozone into the water is provided downstream of the filter, following the flow of the water, with the supply being executed at time intervals and/or depending on the volume of water treated. In the case of performance of a cleaning process, the output of water is temporarily blocked to a user, and the ozone-containing water is first removed via a the water drain in the water treatment unit and only subsequently via the water outlet when a warning is issued. Typically, it is ensured that the reaction of the ozone proceeds within the water treatment unit in order to prevent human contact with ozone-containing water. It is advantageous here when at least the amount of ozone-containing water which ensures that any contamination in the output region is eliminated is conducted through the output region. The control device opens all the valves within the water treatment unit such that the ozone-containing water flows through any potentially microbial contaminated water-conducting conduits and vessels. At the same time, the backflow guard integrated into the filter and/or the backflow guard integrated into a hose connection of the filter prevent the ozone from penetrating into the filter and being absorbed there by materials.

The control device ensures that, after a cleaning process, at least a purging process is effected, which removes all the ozone-containing water from all water-conducting conduits and vessels via the drainage conduit and/or via the outlet conduit from the unit.

Thermal disinfection is optionally possible if the water treatment unit has a means of heating water, for example a boiler. Optionally, disinfection can be effected by means of carbonated water if the water-conducting unit has a means of carbonating water, for example by means of a carbonator. Release via the water outlet is optionally possible when it is ensured, for example, by means of a display or by means of sensors, that no humans will consume the water used for cleaning the unit.

The method of fig. 2 commences in a step 100, for example with startup of the water treatment unit. In a step 110, it is ascertained whether a time interval since a last cleaning process or a fixed volume of water has been treated by the water treatment unit. If it is not the case, nothing is done, but as soon as either of the two conditions is met, the method jumps to a step 120 and prepares for a cleaning process with a message to a user, for example via a display connected to the control device or a color display connected to the control device, for example on the faucet of the water outlet.

As soon as it has been established in a step 130 that the region beneath an exit pipe of the water outlet is clear and the exit pipe is at a correct angle such that it is above a drain basin, a cleaning process commences with a step 140. The check in step 130 ensures that no user will come into contact with the water discharged by the water outlet, which may be ozone-containing especially during the cleaning process and possibly also during the purge process.

In step 140, the ozone generator is operated and the ozone supply valve is opened, such that ozone-containing water is fed into the conduit system of the water treatment unit.

In a step 150, valves downstream of the ozone supply in the conduit system are actuated alternately by the control device in order to subject all conduits and the device of the water treatment unit downstream of the ozone supply with ozone-containing water. Typically, a schedule is provided, for example recorded in the control device, which stipulates the sequence and duration of the valve openings.

On conclusion of the cleaning process after step 150, in a step 160, the operation of the ozone generator is stopped and the ozone supply valve is closed in order then to undertake a purge process in a step 170. In the purge process, the same schedule is typically used as in the cleaning process for the opening of the valves. In embodiments, however, it is possible to record an alternative schedule for the purge process. After conclusion of the purge process in step 170, the water treatment unit is ready for use again in step 180, such that a water output is permitted again for a user.

Subsequently, the method jumps back to step 110, and nothing is done until one of the two abovementioned conditions has been met.

The invention is not limited to the embodiments described; instead, the scope of the invention is determined by the appended claims.

### List of reference numerals

- 1: water treatment unit
- 3: ozone generator
- 5: ozone supply
- 7: ozone supply valve
- 9: filter
- 11: water inlet
- 13: carbon dioxide reservoir
- 14: carbon dioxide reservoir valve
- 15: carbonator
- 17: cooler
- 19: boiler
- 21: water outlet/faucet
- 23: water outlet valve
- 25: water drain
- 27: water drain valve
- 29: further valves
- 31: control device
- 33: signal input
- 35: signal output
- 37: volume flowmeter
- 39: angle sensor
- 41: optical sensor

## Claims

1. A water treatment unit (1) comprising
a filter (9) disposed downstream of a water inlet (11), wherein the water inlet (11) is intended to supply the filter (9) with water to be treated,
a conduit system disposed downstream of the filter (9) in order to remove treated water that has flowed through the filter (9) in the direction of a water outlet (21) for release of water to a user, and
an ozone generator (3) set up to introduce ozone into an ozone supply conduit (5),
wherein the ozone supply conduit (5) opens into the conduit system between the filter (9) and the water outlet (11).

2. The water treatment unit as claimed in claim 1, wherein the ozone generator (3) is set up to introduce ozone into the conduit system with a concentration of more than 0.1ml/m³.

3. The water treatment unit as claimed in claim 1 or 2, having a backflow guard (10) provided within the filter (9) or downstream of the filter (9).

4. The water treatment unit as claimed in any of the claims 1 to 3, having a control device (31) set up to detect a volume of water treated by the water treatment unit (1), wherein the control device is further set up to initiate a new cleaning process by supply of ozone from the ozone generator (3) depending on the volume and/or depending on a period of time since a last cleaning process.

5. The water treatment unit (1) as claimed in claim 4, wherein the control device (31) is set up to conduct a purge process after a cleaning process, especially before a release of water for a user is approved by the control device.

6. The water treatment unit (1) as claimed in any of the preceding claims, wherein a cooler (17) to cool the water, a boiler (19) to heat the water and/or a carbonator (15) to carbonate the water are provided in the conduit system downstream of the ozone supply conduit (5).

7. The water treatment unit (1) as claimed in any of the preceding claims, wherein the control device (31) is set up, in a cleaning process and/or in a purge process, to release water via the water outlet only when it has been ensured that no user will come into contact with the water released via the water outlet.

8. The water treatment unit (1) as claimed in any of the preceding claims, wherein the water outlet (21) for release of water to a user and additionally a water drain (25) for drainage of water are provided downstream of the ozone supply conduit (5).

9. The water treatment unit (1) as claimed in claim 8,
wherein the control device (31) is set up, in a cleaning process and/or in a purge process, to release the water partly via the water outlet and partly via the water drain; and/or
wherein the control device is set up to alternately actuate valves (29) present in the conduit system during a cleaning process and/or during a purge process.

10. A method of cleaning a water treatment unit (1) as claimed in any of the preceding claims, comprising:
operating the ozone generator for generation of ozone; and
opening an ozone supply valve (7) disposed in the ozone supply conduit (5) for supply of ozone from the ozone generator (3) through the ozone supply conduit (7) into the conduit system.

11. The method as claimed in claim 10, wherein the ozone is introduced into the conduit system with a concentration of more than 0.1ml/m³.

12. The method as claimed in claim 10 or 11, comprising the following step prior to the operating of the ozone generator (3) and/or prior to the opening of the ozone supply valve (7): ensuring that no user will come into contact with the water released by the water outlet.

13. The method as claimed in any of the claims 10 to 12, comprising: initiating a cleaning process comprising at least the steps of operating the ozone generator and opening the ozone supply valve depending on a volume of water treated by the water treatment unit (1) since a last cleaning process and/or depending on a period of time since a last cleaning process.

14. The method as claimed in any of claims 10 to 13, wherein valves (29) in the conduit system are alternately actuated during a cleaning process and/or during a purge process.

15. The method as claimed in any of claims 10 to 14 comprising the following steps, especially after performance of a cleaning process comprising at least the steps of operating the ozone generator (3) and opening the ozone supply valve (7):
stopping the operation of the ozone generator (3);
closing the ozone supply valve (7);
performing a purge process; and
permitting release of water for a user after conclusion of the purge process.
